# EUROPÄISCHE PATENTSCHRIFT

(11) **EP 2 298 530 B1**
(45) Veröffentlichungstag und Bekanntmachung des Hinweises auf die Patenterteilung: **01.04.2015**
(21) Anmeldenummer: 10009596.7
(22) Anmeldetag: 15.09.2010
(51) Int. Cl.: B29C 45/73, B29C 35/00

(54) **Vorrichtung und Verfahren zur Temperierung eines Spritzgießwerkzeugs**
Method and device for tempering an injection moulding tool
Dispositif et procédé destinés à tempérer un outil de moulage par injection

(30) Priorität: 19.09.2009 DE 102009042295
(43) Veröffentlichungstag der Anmeldung: 23.03.2011
(73) Patentinhaber: Wenz Kunststoff GmbH & Co. KG, 58511 Lüdenscheid (DE)
(72) Erfinder: Weller, Karsten, 58509 Lüdenscheid (DE); Wenz, Michael, 58579 Schalksmühle (DE)
(74) Vertreter: Patentanwälte Dörner & Kötter PartG mbB

(56) Entgegenhaltungen:
- EP-A2- 0 218 919
- DE-A1- 4 307 347
- DE-U1- 20 017 190
- JP-A- 60 141 359
- JP-A- 61 252 122
- JP-A- 2001 018 275
- FRIEL P: "WERKZEUGTEMPERIERUNG", KUNSTSTOFFE, CARL HANSER VERLAG, MUNCHEN, DE, Bd. 75, Nr. 12, 1. Dezember 1985 (1985-12-01), Seiten 882-888, XP001172774, ISSN: 0023-5563

## Beschreibung

Die Erfindung betrifft ein Verfahren zur Temperierung eines Spritzgießwerkzeugs nach dem Patentanspruch 1. Die Erfindung betrifft weiterhin eine Vorrichtung zur Durchführung eines Verfahrens zur Temperierung einer Spritzgießform nach dem Patentanspruch 8.

Beim Kunststoffspritzgießen wird mit einer Spritzgießmaschine der jeweilige Kunststoff in einer Spritzeinheit plastifiziert und anschließend in ein Spritzgießwerkzeug eingespritzt, welches die Spritzgießform enthält. Anschließend wird das Werkzeug abgekühlt, um das Spritzgussteil zügig auszuhärten, welches anschließend ausgeworfen wird, wonach der nächste Spritzgusszyklus beginnt. Die Temperaturführung des Werkzeugs spielt hierbei eine außerordentliche Rolle. Daher wurden in der Vergangenheit aufwendige Verfahren entwickelt, um eine optimale Temperaturführung des Werkzeugs zu erreichen. So ist es bekannt, dass Spritzgusswerkzeug kontinuierlich über Temperatursensoren zu überwachen und einen durch das Werkzeug geführten Fluidkreislauf in Abhängigkeit von den ermittelten Messwerten hinsichtlich Druck und Temperatur einzuregeln, wie beispielsweise in JP 61 252122 A, DE 43 07 347 A1 sowie in JP 2001 018275 A offenbart. Der Trend der Entwicklung geht dahin, die kontinuierliche Temperaturüberwachung auf Teilbereiche eines Werkzeugs zu erstrecken, so dass verschiedene Werkzeugbereiche getrennt voneinander überwacht und deren Fluiddurchfluss separat geregelt wird. Diese Richtung der Entwicklung erweist sich als sehr aufwendig und kostenintensiv. Zudem ist der maximale Temperaturunterschied zwischen Werkzeug und Spritzgussteil beschränkt, da ein zu großer Temperaturunterschied ein Überschwingen der entsprechenden Fluidregelkreise zur Folge haben kann.

Hier will die Erfindung Abhilfe schaffen. Der Erfindung liegt die Aufgabe zu Grunde, ein Verfahren zur Temperierung eines Spritzgießwerkzeugs zu schaffen, welches einfach und kostengünstig realisierbar ist und bei dem ein größerer Temperaturunterschied zwischen Werkzeug und Spritzgussteil erzielbar ist, wodurch die Wärmeabfuhr maximiert ist. Gemäß der Erfindung wird diese Aufgabe durch die Merkmale des Patentanspruch 1 gelöst.

Mit der Erfindung ist ein Verfahren zur Temperierung eines Spritzgießwerkzeugs geschaffen, welches einfach und kostengünstig realisierbar ist und bei dem eine größere maximale Temperaturdifferenz zwischen Werkzeug und Spritzteil ermöglicht ist, wodurch der Wärmeabfluss maximiert ist. Überraschender Weise hat sich gezeigt, dass innerhalb der Produktion mittels moderner Spritzgießmaschinen sich die einzelnen Spritzgusszyklen in Bezug auf die Temperierung des Werkzeugs nur unwesentlich unterscheiden. Durch einmalige empirische Einstellung eines optimalen Spritzgusszyklus mit entsprechender Einstellung von Kühlmenge, -druck und -temperatur über die Zeit kann das Produktionsergebnis durch Wiederholung der zeitlichen Abfolge der Kühlmittelparameter erneut abgebildet werden. Hierzu ist erforderlich, dass die über die Zeit ermittelten Kühlmittelparameter abgespeichert werden und jeweils exakt zum selben Zeitpunkt eines Spritzgießprozesses abgespielt werden. Dabei werden an der Kühlmittelversorgung zwei Kühlkreisläufe angeordnet, wobei ein primärer Kühlkreislauf durch das Spritzgießwerkzeug und ein sekundärer Kreislauf außerhalb des Spritzgießwerkzeugs geführt wird. Hierdurch ist eine separate kontinuierliche Temperierung des Kühlmittels in einem Kreislauf ohne Beeinflussung der Spritzgießwerkzeugtemperatur ermöglicht. So kann beispielsweise im Produktionsprozess das Kühlmittel durch den Primärkreislauf geführt werden, wodurch die Wärme zur Beschleunigung des Erstarrens des Spritzgussteils aus dem Spritzgießwerkzeug abgeführt wird; nach Auswerfen des erstarrten Spritzgussteils kann nun der Primärkreislauf geschlossen werden, um ein übermäßiges Auskühlen des Spritzgießwerkzeugs zu vermeiden. Das Kühlmittel kann bei geschlossenem Primärkreislauf innerhalb des Sekundärkreislaufs zirkulieren und mit konstantem Druck auf der gewünschten Temperatur gehalten werden.

Die Steuereinheit ist eine speicherprogrammierbare Steuerung. Derartige Steuerungen eignen sich besonders gut für die Speicherung und wiederholte Durchführung von Steuersequenzen. Zudem sind derartige speicherprogrammierbare Steuerungen kostengünstig realisierbar.

In Ausgestaltung der Erfindung erfolgt der Anstoß der jeweiligen Sequenz durch einen Taktgeber der Produktionsanlage. Bevorzugt wird hierzu das Steuersignal eines Werkzeugzylinders des Spritzgießwerkzeugs als Taktsignal verwendet. Hierdurch werden bereits vorhandene Signale der Spritzgießmaschine zur Taktung der Steuerung verwendet, wodurch der Aufwand minimiert ist. Selbstverständlich ist an dieser Stelle auch jedes andere regelmäßig wiederkehrende Signal der Spritzgießmaschine einsetzbar.

In weiterer Ausgestaltung der Erfindung wird empirisch über eine Anlaufphase die erforderliche Kühlmittelmenge, -druck und -temperatur über die Zeit ermittelt und die während dieser Anlaufphase ermittelten erforderlichen Steuersignale werden in der Steuereinheit als zusätzliche Sequenz abgelegt. Hierdurch ist die Temperierung des Werkzeugs beim Anfahren der Spritzgießmaschine auf Basis empirisch ermittelter Steuerungssequenzen auf einfache und kostengünstige Art und Weise ermöglicht. Unter dem Begriff "Kühlmittel" wird nachfolgend jedes zur Temperierung des Spritzgießwerkzeugs geeignete Fluid verstanden.

In Weiterbildung der Erfindung wird bei Ausbleiben eines Taktsignals im Produktionsprozess über einen definierten Zeitraum automatisch beim nächsten Taktsignal die Anlaufsequenz ausgeführt. Für die Qualität der Spritzgussprodukte ist es entscheidend, dass die Werkzeugtemperatur nicht unter einen Schwellwert fällt. Das Ausbleiben eines Taktsignals im Produktionsprozess über einen längeren Zeitraum bedeutet einen Ausfall der Maschine, so dass beim Wiederanfahren der Maschine die Ansteuerung über die Anlaufsequenz durchzuführen ist, bei der das Werkzeug zunächst auf die erforderliche Temperatur gebracht wird. Hierdurch wird einer Fehlcharge nach einem Ausfall der Spritzgussmaschine entgegengewirkt. Die Temperierung des Werkzeugs erfolgt bevorzugt über das Kühlmittel, welches hierzu mit entsprechender Temperatur durch das Werkzeug geleitet wird.

In weiterer Ausgestaltung der Erfindung wird innerhalb des Kühlmittelreservoirs der Kühlmittelversorgung wenigstens ein Reservoir-Temperatursensor angeordnet, der mit der Steuereinrichtung verbunden wird, welche auf Basis des von dem Reservoir-Temperatursensor gelieferten Ist-Temperatur-Signals sowie eines vorgegebenen Reservoirtemperatur-Sollwerts die Steuerung des Heiz-/ Kühlelements vornimmt. Hierdurch ist eine einfache Regelung der Fluidtemperatur im Kühlmittelreservoir erzielt.

In Weiterbildung der Erfindung wird im Rücklauf des Primärkreislaufs ein Rücklauf-Temperatursensor angeordnet, der mit der Steuereinrichtung verbunden wird, welche anhand der Temperaturdifferenz zwischen Reservoir-Temperatursensor und Rücklauf-Temperatursensor einen Abgleich mit einer vorgegebenen Grenztemperaturdifferenz vornimmt, wobei bei Unterschreiten der Grenztemperaturdifferenz der in der Steuereinrichtung hinterlegte Sollwert für die Reservoirtemperatur angehoben wird. Hierdurch werden Fehlteilproduktionen auf Grund eines unterkühlten Werkzeugs vermieden.

Der Erfindung liegt weiterhin die Aufgabe zu Grunde, eine Vorrichtung zur Durchführung eines Verfahrens zur Temperierung eines Spritzgießwerkzeugs zu schaffen, welche einfach und kostengünstig realisierbar ist und bei der eine größere maximale Temperaturdifferenz zwischen Spritzgießwerkzeug und Spritzgussteil ermöglicht ist, wodurch ein größerer Wärmeabfluss bewirkt ist. Gemäß der Erfindung wird diese Aufgabe durch die Merkmale des Patentanspruchs 10 gelöst. Durch die Anordnung eines Sekundärkreislaufs, der außerhalb des Spritzgießwerkzeugs geführt ist, ist in Zeitabständen konstanter Werkzeugtemperatur ein Betrieb des Kühlmittelkreislaufs mit kontinuierlichem Druck und Temperatur ermöglicht, wobei über die angeordneten Ventile das Werkzeug temporär aus dem Kühlkreislauf herausgenommen werden kann. Bevorzugt ist hierzu der Sekundärkreislauf zusammen mit dem Kühlmittelkreislauf durch ein gemeinsames Kühl- / Heizelement geführt. Dieses Kühl-/ Heizelement ist vorteilhaft innerhalb eines gemeinsamen Kühlmittelreservoirs angeordnet.

In Weiterbildung der Erfindung sind die Ventile mit der Steuerungseinrichtung verbunden und über diese steuerbar. Hierdurch ist die Zuschaltung bzw. Abschaltung des Sekundärkreislaufs bzw. des durch das Werkzeug geführten Primärkreislaufs über die Steuerungseinrichtung innerhalb einer Sequenz ermöglicht.

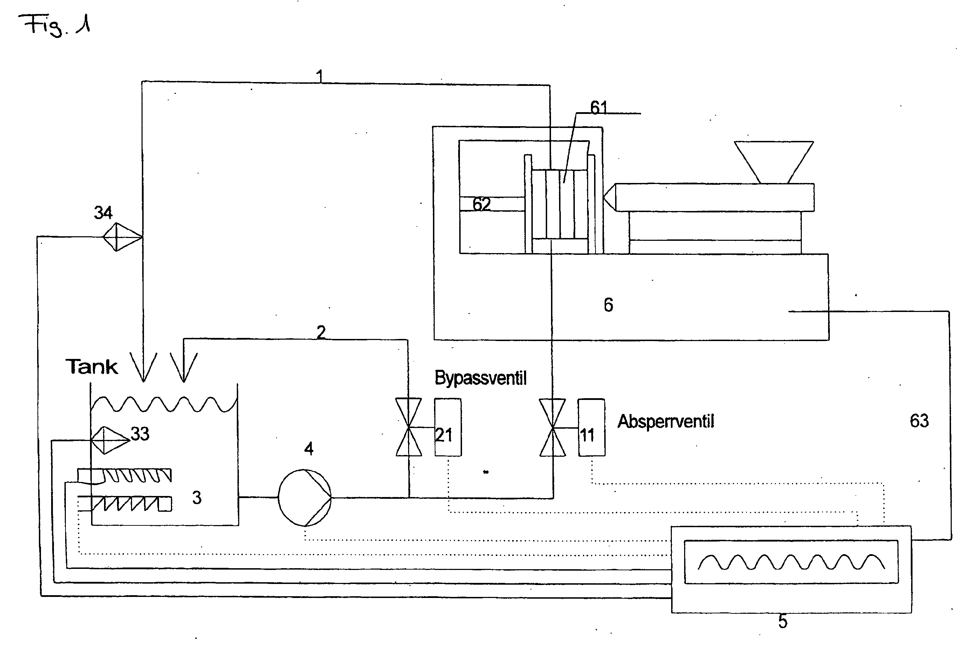

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Die einzige Figur 1 zeigt die schematische Darstellung einer Vorrichtung zur Temperierung eines Sprüzgießwerkzeugs.

Die als Ausführungsbeispiel gewählte Vorrichtung zur Temperierung eines Spritzgießwerkzeugs besteht im Wesentlichen aus einem Primärkreislauf 1 sowie einem Sekundärkreislauf 2, welche beide durch ein gemeinsames Heiz- / Kühlmodul 3 innerhalb eines gemeinsamen Kühlmittelreservoirs 31 geführt sind und über eine gemeinsame Pumpe 4 betrieben werden. Der Primärkreislauf 1 ist über Kanäle durch das Spritzgießwerkzeug 61 einer Spritzgießmaschine 6 geführt. Es ist ein Ventil 11 angeordnet, über welches der Primärkreislauf 1 schließbar ist. Der Sekundärkreislauf 2 ist außerhalb des Spritzgießwerkzeugs 61 geführt und weist ebenfalls ein Ventil 21 auf, mittels dessen der Sekundärkreislauf 2 schließbar ist.

Das Heiz- / Kühlmodul 3, die Pumpe 4 sowie die Ventile 11, 21 sind über Steuerleitungen 51 mit einer speicherprogrammierbaren Steuerung (SPS) 5 verbunden, über die sie steuerbar sind. Weiterhin ist die SPS 5 mit einem innerhalb des Kühlmittelreservoirs angeordneten Temperatursensor 33 verbunden.

Das Spritzgießwerkzeug 61 ist innerhalb der Spritzgießmaschine 6 mit einem Extruder 62 verbunden, über den der plastifizierte Kunststoff in das Werkzeug 61 gefördert wird. Der Extruder 62 ist mit einer Maschinensteuerung 63 verbunden, Ober den dieser ansteuerbar ist und welche wiederum mit der SPS 5 verbunden ist.

Zur Temperierung des Werkzeugs 61 wird zunächst empirisch die innerhalb eines Produktionszyklus optimalen Parameter wie Kühlmittelmenge, -druck und -temperatur ermittelt und die hierfür erforderlichen Steuerungsparameter für das Heiz- / Kühlmodul 3, die Pumpe 4 sowie die Ventile 11, 21 in der SPS 5 als Sequenz abgelegt. Als Taktgeber für die Signalisierung des Beginns eines neuen Produktionszyklusses wird im Ausführungsbeispiel das Steuersignal der Maschinensteuerung 63 an den Extruder 62 für die Beschickung des Spritzgießwerkzeugs 61 verwendet, welches von der Maschinensteuerung 63 an die SPS 5 gesendet wird. Alternativ kann beispielsweise auch das Steuersignal der Maschinensteuerung 63 an einen Schließzylinder des Werkzeugs 61 verwendet werden,

Weiterhin wird für die Anlaufphase der Spritzgießmaschine 6 in gleicher Art und Weise empirisch eine Steuersequenz zur Steuerung der Kreisläufe 1, 2 ermittelt und die entsprechenden Steuerparameter werden als Anlaufsequenz in der SPS 5 hinterlegt.

Während des Produktionsprozesses erfolgt zunächst der Aufruf der Anlaufsequenz der SPS 5, wodurch das Kühlmittel 32 in dem Kühlmittelreservoir 31 über das Heiz- / Kühlmodul 3 erwärmt wird. Gleichsam erfolgt die Ansteuerung der Ventile 11, 21, wobei zunächst das Ventil 11 des Primärkreislaufs geöffnet und das Ventil 21 des Sekundärkreislaufs 2 geschlossen wird, Das temperierte Fluid wird somit über die Pumpe 4 im Primärkreislauf 1 durch das Spritzgießwerkzeug gefördert, welches so beispielsweise auf eine Betriebstemperatur von 80°C erwärmt wird. Ist während des Anlaufprozesses eine Wärmeabfuhr des Werkzeugs 61 erforderlich, so erfolgt eine Kühlung des Kühlmittels 32 über das Heiz- / Kühlmodul 3, welches wiederum in dem Primärkreislauf 1 gefördert wird; der Sekundärkreislauf 2 ist über das Ventil 21 geschlossen.

Hat das Spritzgießwerkzeug 61 die gewünschte Betriebstemperatur Temperatur erreicht, so wird das Ventil 11 des Primärkreislaufs 1 geschlossen und das Ventil 21 des Sekundärkreislaufs 2 geöffnet. Auf diese Weise kann das Fluid mit dem gewünschten Druck und Temperatur im Sekundärkreislauf 2 umgewälzt werden, bis eine erneute Wärmeabfuhr von dem Spritzgießwerkzeug 61 erforderlich ist. Hier wird das Ventil 11 geöffnet und das Ventil 21 geschlossen, wodurch das Fluid mit dem erforderlichen Druck und der erforderlichen Temperatur durch das Werkzeug 61 gefördert wird.

Nach Abschluss des Anlaufvorgangs wird über die Maschinensteuerung 64 ein Taktsignal an die SPS 5 gegeben, worauf die für die Produktion hinterlegte Steuerungssequenz ausgeführt wird. Auch hier erfolgt zu den Zeiten, in denen keine Wärmeabfuhr der in dem Werkzeug 61 befindlichen Spritzgießform erforderlich ist, das Fluid außerhalb des Werkzeugs 61 in den Sekundärkreislauf 2 gefördert. Beispielsweise kann das Kühlmittel 32 innerhalb des Sekundärkreislaufs 2 auf einer Temperatur von 50°C gehalten werden. Zur Beschleunigung der Erstarrung des in dem Spritzgießwerkzeug 61 befindlichen Spritzgussteils innerhalb des Produktionsprozesses kann das so temperierte Kühlmittel 32 durch Öffnen des Ventils 11 durch das Werkzeug 61 gefördert werden.

Die Temperatur des Kühlmittels 32 wird über den innerhalb des Kühlmittelreservoirs 31 angeordneten Reservoir-Temperatursensor 33 kontinuierlich ermittelt und an die SPS 5 gemeldet. Weiterhin wird über einen im Rücklauf des Primärkreislaufs 1 angeordneten Rücklauf-Temperatursensor 34 die Rücklauftemperatur ermittelt. Fällt die Rücklauftemperatur des Kühlmittels 32 unter einen definierten Schwellwert, der auf eine Unterkühlung des Werkzeugs 61 unter die erforderliche Betriebstemperatur schließen lässt, so wird der hinterlegte Sollwert der Reservoirtemperatur innerhalb der SPS 5 angepasst, bis die erforderliche Betriebstemperatur im Werkzeug 61 erreicht ist.

In dem Fall, dass das Taktsignal der Maschinensteuerung 64 über einen definierten Zeitraum ausbleibt (in diesem Fall ist von einem Ausfall der Spritzgießmaschine auszugehen) oder eine externe Störmeldung vorliegt, wird die hinterlegte Anlaufsequenz innerhalb der SPS 5 gestartet. Grundsätzlich erfolgt der Start einer Sequenz der SPS 5 nach Eingang eines Taktsignals der Maschinensteuerung 64.

Die dargestellte Verfahrensweise zur Temperierung der Spritzgießform innerhalb des Werkzeugs 61 stellt lediglich eine beispielhafte Vorgehensweise dar. Selbstverständlich können in der SPS auch weitere Sequenzen für definierte Prozesszyklen abgelegt sein, beispielsweise für den Betrieb mit unterschiedlichen Kunststoffsorten. Wesentlich an dem erfindungsgemäßen Verfahren ist, dass keine kontinuierlichen Regelprozesse zur Ansteuerung der Kühlkreisläufe angeordnet sind, sondern vielmehr empirisch ermittelte Referenzsteuersequenzen über eine speicherprogrammierbare Steuerung über einen Taktgeber angesteuert wiederholt abgespielt werden. Die im Stand der Technik erforderliche aufwändige Bestückung des Spritzgießwerkzeugs mit Temperatursensoren und die damit einhergehende aufwändige Auswertung entfallen. Es erfolgt lediglich eine Temperaturerfassung des Kühlmittels 32 innerhalb des Kühlmittelreservoirs. Der erfindungsgemäße zweite, neben dem Werkzeug 61 geführte Sekundärkreislauf 2 ermöglicht eine kontinuierliche Temperierung und Umwälzung des Kühlmittels 32 ohne Beeinträchtigung der Werkzeugtemperatur zu Zeiten, in denen eine Wärmeabfuhr aus dem Werkzeug 61 nicht erwünscht ist. Hierdurch ist eine größere Temperaturdifferenz zwischen Spritzgießwerkzeug 61 (insbesondere dessen Spritzgießformwand) und Kühlmittel 32 ermöglicht.

## Patentansprüche

1. Verfahren zur Temperierung eines Spritzgießwerkzeugs (61), bei dem empirisch für einen Produktionszyklus die erforderliche Kühlmittelmenge, -druck und -temperatur über die Zeit ermittelt wird, die während dieses Produktionszyklus erforderlichen Steuersignale für die Kühlmittelversorgung in einer Steuereinheit als Sequenz mit definiertem Start- und Endzeitpunkt abgelegt werden und die Sequenz bei jedem erneuten Produktionszyklus im Produktionsprozess durch die Steuereinheit erneut durchgeführt wird, wobei an der Kühlmittelversorgung zwei Kühlmittelkreisläufe (1, 2) angeordnet werden, die durch ein gemeinsames Heiz-Kühlmodul (3) innerhalb eines gemeinsamen Kühlmittelreservoirs (31) geführt und über eine gemeinsame Pumpe (4) betrieben werden, wobei ein über ein erstes Ventil (11) angeordneter schließbarer primärer Kreislauf (1) durch das Spritzgießwerkzeug und ein über ein zweites Ventil (21) schließbarer sekundärer Kreislauf (2) außerhalb des Spritzgießwerkzeugs (61) geführt wird und wobei die Steuereinheit eine speicherprogrammierbare Steuerung (5) ist, mit der das Heiz-Kühlmodul (3), die Pumpe (4) sowie die Ventile (11, 21) über Steuerleitungen (51) verbunden werden.

2. Verfahren nach Anspruch 1, **dadurch gekennzeichnet, dass** der Anstoß der jeweiligen Sequenz durch einen Taktgeber der Produktionsanlage erfolgt.

3. Verfahren nach Anspruch 2, **dadurch gekennzeichnet, dass** das Steuersignal eines Werkzeugschließzylinders des Spritzgießwerkzeugs (61) als Taktsignal verwendet wird.

4. Verfahren nach einem der vorgenannten Ansprüche, **dadurch gekennzeichnet, dass** empirisch über eine Anlaufphase die erforderliche Kühlmittelmenge, -druck und -temperatur über die Zeit ermittelt wird und die während dieser Anlaufphase ermittelten erforderlichen Steuersignale in der Steuereinheit (5) als zusätzliche Sequenz abgelegt werden.

5. Verfahren nach Anspruch 4, **dadurch gekennzeichnet, dass** bei Ausbleiben eines Taktsignals im Produktionsprozess über einen definierten Zeitraum automatisch beim nächsten Taktsignal die Anlaufsequenz ausgeführt wird.

6. Verfahren nach einem der vorgenannten Ansprüche, **dadurch gekennzeichnet, dass** innerhalb des Kühlmittelreservoirs der Kühlmittelversorgung wenigstens ein Reservoir-Temperatursensor (33) angeordnet wird, der mit der Steuereinrichtung (5) verbunden wird, welche auf Basis des von dem Reservoir-Temperatursensor (33) gelieferten Ist-Temperatur-Signals sowie eines vorgegebenen Reservoirtemperatur-Sollwerts die Steuerung des Heiz-/Kühlelements (3) vornimmt.

7. Verfahren nach Anspruch 6, **dadurch gekennzeichnet, dass** im Rücklauf des Primärkreislaufs ein Rücklauf-Temperatursensor (34) angeordnet wird, der mit der Steuereinrichtung (5) verbunden wird, welche anhand der Temperaturdifferenz zwischen Reservoir-Temperatursensor (33) und Rücklauf-Temperatur- sensor (34) einen Abgleich mit einer vorgegebenen Grenztemperaturdifferenz vornimmt, wobei bei Unterschreiten der Grenztemperaturdifferenz der in der Steuereinrichtung hinterlegte Sollwert für die Reservoirtemperatur angehoben wird.

8. Vorrichtung zur Durchführung eines Verfahrens zur Temperierung eines Spritzgießwerkzeugs nach einem der Ansprüche 1 bis 7, umfassend ein Spritzgießwerkzeug (61), einen Primärkreislauf (1), einen Sekundärkreislauf (2), eine Pumpe (4) und eine Steuereinrichtung (5) mit einer Speichereinheit, in der empirisch ermittelten Steuersequenzen zur Steuerung eines Primärkreislaufs (1) abgelegt sind, wobei der Primärkreislauf (1) durch in dem Spritzgießwerkzeug (61) eingebrachte Kanäle geführt ist, wobei ein Sekundärkreislauf (2) angeordnet ist, der außerhalb des Spritzgießwerkzeugs (61) geführt ist und über die Pumpe (4) des Primärkreislaufs (1) betrieben ist, wobei Primär- und Sekundärkreislauf durch ein gemeinsames Heiz-Kühlmodul (3) innerhalb eines gemeinsamen Kühlmittelreservoirs (31) geführt sind und wobei Ventile (11, 21) zur Durchflusssteuerung der beiden Kreisläufe (1, 2) angeordnet sind, **dadurch gekennzeichnet, dass** die Steuerung eine speicherprogrammierbare Steuerung ist und dass der Primärkreislauf (1) durch das erste Ventil (11) schließbar ist und der Sekundärkreislauf (2) durch das zweite Ventil (21) schließbar ist, wobei die Steuerung (5) mit dem Heiz-Kühlmodul (3), der Pumpe (4) und den beiden Ventilen (11, 21) über Steuerleitungen (51) verbunden ist.

9. Vorrichtung nach Anspruch 8, **dadurch gekennzeichnet, dass** ein Taktgeber zum Auslösen einer Sequenz angeordnet ist, der mit der Steuereinrichtung (5) verbunden ist.

## Claims

1. Method of regulating the temperature of an injection moulding tool (61), where for a production cycle the required coolant flow rate, pressure and temperature over time are determined, the control signals required for the coolant supply system during this production cycle are stored in a control unit as a sequence with a specified start and finish time and for every repeated production cycle the sequence is again run through in the production process by the control unit, and where two coolant circuits (1, 2) that are run through a common heating/cooling module (3) inside a common coolant reservoir (31) and driven by a common pump (4) are disposed on the coolant supply system and where a primary circuit (1) which can be closed by means of a first valve (11) is run through the injection moulding tool and a secondary circuit (2) which can be closed by means of a second valve (21) is run outside the injection moulding tool (61) and where the control unit is a programmable- logic control system (5) to which the heating/cooling module (3), the pump (4) and the valves (11, 21) are connected by means of control lines (51).

2. Method in accordance with claim 1, **characterised in that** the respective sequence is started up by a clock generator in the production plant.

3. Method in accordance with claim 2, **characterised in that** the control signal of a tool closing cylinder of the injection moulding tool (61) is used as a clock signal.

4. Method in accordance with any one of the aforementioned claims, **characterised in that** the required coolant flow rate, pressure and temperature over time are determined empirically through a start-up phase and the required control signals determined during this start-up phase are stored in the control unit (5) as an additional sequence.

5. Method in accordance with claim 4, **characterised in that**, if a clock signal is not sent over a specified time period during the production process, the start-up sequence is run through automatically when the next clock signal is sent.

6. Method in accordance with any one of the aforementioned claims, **characterised in that** disposed within the coolant reservoir of the coolant supply system is or are one or more reservoir sensors (33) that is or are connected to the control system (5), which on the basis of the actual- temperature signal sent by the reservoir temperature sensor (33) and of a specified required reservoir temperature controls the heating/cooling element (3).

7. Method in accordance with claim 6, **characterised in that** disposed in the return portion of the primary circuit is a return temperature sensor (34) that is connected to the control system (5), which uses the temperature difference between the reservoir temperature sensor (33) and the return temperature sensor (34) to set a specified limit temperature differential, where, if the limit temperature differential is fallen below, the required reservoir temperature value stored in the control system is raised.

8. Device for applying a method of regulating the temperature of an injection moulding tool in accordance with any one of claims 1 to 7, comprising an injection moulding tool (61), a primary circuit (1), a secondary circuit (2), a pump (4) and a control system (5) with a storage unit in which empirically determined control sequences for controlling a primary circuit (1) are stored, where the primary circuit (1) is run through ducts constructed in the injection moulding tool (61) and where a secondary circuit (2) which is run outside the injection moulding tool (61) and is driven by the pump (4) of the primary circuit (1) is disposed and where the primary and secondary circuits are run through a common heating/cooling module (3) inside a common coolant reservoir (31) and where valves (11, 21) to control the flow through the two circuits (1, 2) are disposed, **characterised in that** the control system is a programmable logic control system and **in that** the primary circuit (1) can be closed by the first valve (11) and the secondary circuit (2) can be closed by the second valve (21) and where the control system (5) is connected to the heating/cooling module (3), the pump (4) and the two valves (11, 21) by means of control lines (51).

9. Device in accordance with claim 8, **characterised in that** a clock generator to start up a sequence and connected to the control system (5) is disposed.

## Revendications

1. Procédé pour tempérer un outil de moulage par injection (61), au cours duquel sont déterminées empiriquement sur l'échelle temps, pour un cycle de production, la quantité, la pression et la température nécessaires au produit de refroidissement, sont enregistrés dans une unité de commande les signaux de commande nécessaires, au cours de ce cycle de production, à l'alimentation en liquide de refroidissement, sous forme de séquence incluant des instants de départ et de fin définis, et au cours duquel la séquence est répétitivement exécutée par l'unité de commande lors de chaque nouveau cycle de production dans le processus de production, sachant que contre l'alimentation en liquide de refroidissement sont agencés deux circuits (1, 2) de liquides de refroidissement exploités par un module commun (3) de chauffage et refroidissement à l'intérieur d'un réservoir commun (31) de liquide de refroidissement, et exploités via une pompe (4) commune, sachant qu'un circuit primaire (1) obturable agencé pour passer par une première vanne (11) traverse l'outil de moulage par injection et qu'un circuit secondaire (2) obturable passant par une deuxième vanne (21) est guidé hors de l'outil de moulage par injection (61), et sachant que l'unité de commande est un automate programmable industriel (5) auquel sont reliés, via des lignes de commande (51), le module (3) de chauffage et refroidissement, la pompe (4) ainsi que les vannes (11, 21).

2. Procédé selon la revendication 1, **caractérisé en ce que** le démarrage de chaque séquence respective est ordonné par un cadenceur de l'installation de production.

3. Procédé selon la revendication 2, **caractérisé en ce que** le signal de commande d'un vérin de fermeture de l'outil de moulage par injection (61) est utilisé comme signal de cycle.

4. Procédé selon l'une des revendications précitées, **caractérisé en ce que** la quantité, la pression et la température du liquide de refroidissement nécessaires sont déterminées sur l'échelle temps au cours d'une phase de démarrage et que les signaux de commande nécessaires déterminés pendant cette phase de démarrage sont enregistrés dans l'unité de commande (5) sous forme de séquence supplémentaire.

5. Procédé selon la revendication 4, **caractérisé en ce que** l'absence d'un signal de cycle pendant une période définie au cours du processus de production entraîne automatiquement à l'exécution de la séquence de démarrage lors du signal de cycle suivant.

6. Procédé selon l'une des revendications précédentes, **caractérisé en ce qu'**à l'intérieur du réservoir de produit de refroidissement est agencé au moins un capteur (33) de température du réservoir, capteur qui est relié à l'équipement de commande (5) qui, sur la base du signal de température réelle livré par le capteur (33) de température du réservoir ainsi que d'une température de consigne définie pour le réservoir, se charge de piloter l'élément (3) de chauffage-refroidissement.

7. Procédé selon la revendication 6, **caractérisé en ce que** dans le circuit retour du circuit primaire est agencé un capteur de température (34) du circuit retour relié avec l'équipement de commande (5), lequel équipement se charge de comparer le différentiel de température entre le capteur (33) de température du réservoir et le capteur (34) de température du circuit retour et, lorsque le différentiel limite défini entre ces température est dépassé par défaut, la température de consigne du réservoir enregistrée dans l'équipement de commande est haussée.

8. Dispositif pour réaliser un procédé destiné à tempérer un outil de moulage par injection selon l'une des revendications 1 à 7, comprenant un outil de moulage par injection (61), un circuit primaire (1), un circuit secondaire (2), une pompe (4) et un équipement de commande (5) comprenant une unité mémoire dans laquelle sont enregistrées les séquences, empiriquement déterminées, servant à piloter un circuit primaire (1), sachant que le circuit primaire (1) est guidé par des canaux ménagés dans l'outil de moulage par injection (61), sachant qu'est agencé un circuit secondaire (2) au tracé situé hors de l'outil de moulage par injection (61) et exploité via la pompe (4) du circuit primaire (1), sachant que les circuits primaire et secondaire sont guidés via un module de chauffage-refroidissement (3) conjoint à l'intérieur d'un réservoir conjoint (31) de liquide de refroidissement, et sachant que les vannes (11, 21) sont agencées pour piloter le débit des deux circuits (1, 2), **caractérisé en ce que** la commande est un automate programmable industriel et que le circuit primaire (1) peut être obturé par la première vanne (11) et le circuit secondaire (2) par la deuxième vanne (21), sachant que la commande (5) est reliée avec le module de chauffage-refroidissement (3), la pompe (4) et les deux vannes (11, 21) via les lignes de commande (51).

9. Dispositif selon la revendication 8, **caractérisé en ce qu'**est agencé un cadenceur servant à déclencher une séquence et relié à l'équipement de commande (5).
